# EUROPEAN PATENT SPECIFICATION

(11) **EP 3 982 019 B1**
(45) Date of publication and mention of the grant of the patent: **25.11.2026**
(21) Application number: 21202234.7
(22) Date of filing: 12.10.2021
(51) Int. Cl.: F16K 15/06

(54) **RETAINER GUIDANCE FOR RINSING VALVES**
HALTERUNGSFÜHRUNG FÜR SPÜLVENTILE
GUIDAGE DE RETENUE DE RINÇAGE DE SOUPAPES

(30) Priority: 12.10.2020 US 202063090524 P
(43) Date of publication of application: 13.04.2022
(73) Proprietor: B/E Aerospace, Inc., Winston-Salem, NC 27105 (US)
(72) Inventor: RESZEWICZ, Modest Adam, 51-317 Wroclaw (PL); SWIRNIAK, Pawel, 51-317 Wroclaw (PL); CHUH, Yen, Winston-Salem, NC, 27105 (US); HOANG, Thao, Arlington, 98223 (US)
(74) Representative: Dehns

(56) References cited:
- EP-A1- 0 573 865
- AU-B2- 606 060
- GB-A- 1 527 775
- KR-A- 20130 137 748
- US-A- 2 989 758

## Description

### BACKGROUND

### 1. Field

The present disclosure relates to drains and drain valves, and more particularly to valve retainer guidance.

### 2. Description of Related Art

Main seal assembly guidance in rinsing valves traditionally has some short comings that can later cause problems in the field. Stress caused by a retainer acting on the housing surface causes dents in the housing surface and after time, it is possible for the valve to become stuck in one position. A seal assembly of a return valve is described in EP 0573865.

The conventional techniques have been considered satisfactory for their intended purpose. However, there is an ever present need for improved systems and methods for retainer guidance in drain valves. This disclosure provides a solution for this need.

### SUMMARY

A valve assembly is provided as defined by claim 1.

In a first position the valve head can be spaced apart from an opening of the valve bore, and in a second position the valve head can be sealed against the opening of the valve bore. The first and second guidance retainer rings can follow the valve head and valve stem moving between the first and second positions when moving relative to the housing. The valve stem and the first and second guidance retainer ring can maintain a net of zero force in a radial direction relative to a longitudinal axis of the valve stem.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a cross-sectional side elevation view of an embodiment of a valve assembly constructed in accordance with the present disclosure, showing the guidance retainer rings;
Fig. 2 is a plan view of the valve assembly of Fig. 1, showing the flow bores through one of the guidance retainer rings; and
Fig. 3 is a cross-sectional side elevation view of the valve assembly of Fig. 1, showing the valve head, the valve stem, and the guidance retainer rings in a second position.

### DETAILED DESCRIPTION OF THE PREFERRED EMBODIMENTS

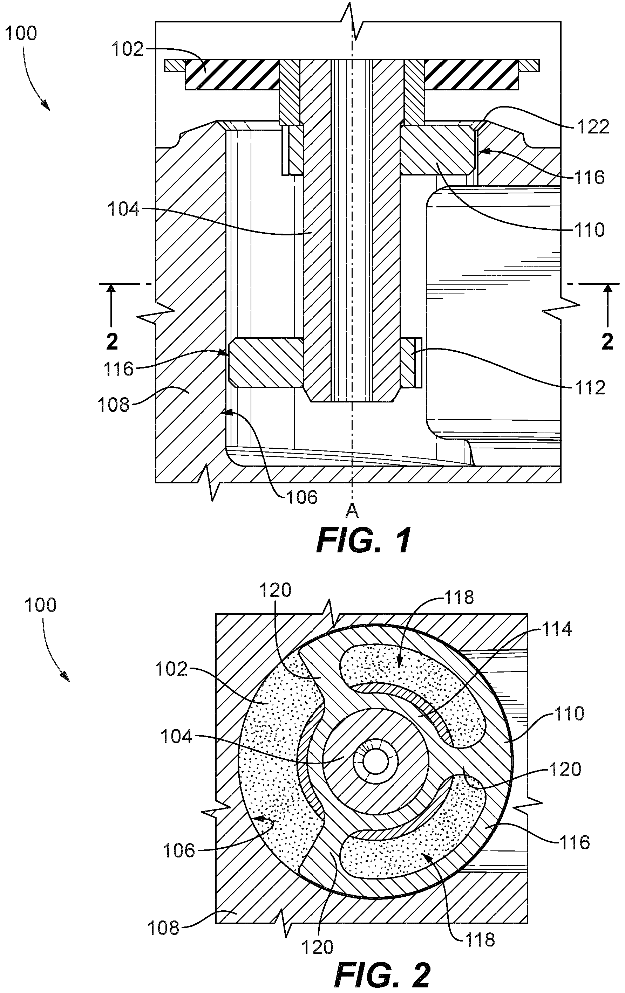

Reference will now be made to the drawings wherein like reference numerals identify similar structural features or aspects of the subject disclosure. For purposes of explanation and illustration, and not limitation, a partial view of an embodiment of a valve assembly in accordance with the disclosure is shown in Fig. 1 and is designated generally by reference character 100. Other embodiments of systems in accordance with the disclosure, or aspects thereof, are provided in Figs. 2-3, as will be described. The systems and methods described herein can be used to provide valve retainer guidance for movement of a valve stem within a housing.

The valve assembly 100 includes a valve head 102. A valve stem 104 extends from the valve head 102 and into a drain bore 106 in a housing 108. A first guidance retainer ring 110 is mounted around the valve stem 104 at a first axial location on the valve stem 104. A second guidance retainer ring 112 is mounted around the valve stem 104 at a second axial location (along longitudinal axis A) on the valve stem 104, spaced apart from the first axial location.

With reference now to Fig. 2, the first guidance retainer ring 110 includes an inner ring 114 that forms a full 360° ring around the valve stem 104. The first guidance retainer ring 110 also includes an outer ring 116 spaced radially apart from the inner ring 114 relative to the longitudinal axis A shown in Fig. 1. The outer ring 116 forms an incomplete ring, less than a full 360°, e.g. extending only about 240° around the circumference around the longitudinal axis A of Fig. 1. The outer ring 116 contacts the housing 108. A pair of arcuate flow bores 118 are defined through the first guidance retainer ring 110 between the inner ring 114 and the outer ring 116. Three spokes 120 connect the inner and outer rings 114, 116. Those skilled in the art will readily appreciate that any suitable number or shape of flow bores and spokes can be used without departing from the scope of this disclosure. The flow bores 118 allow for fluids to pass through the drain bore 106, flowing through the first guidance retainer ring 110.

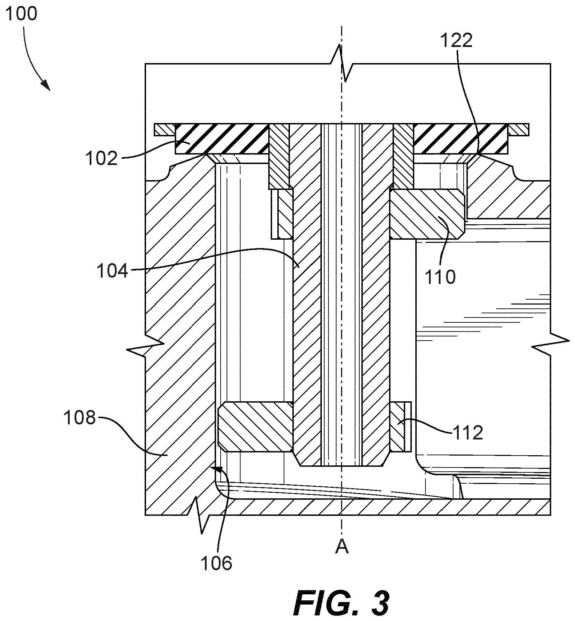

Referring again to Fig. 1, the second guidance retainer ring 112 can be structurally identical to the first guidance retainer ring 110, and the outer ring 116 of each contacts the housing 108. The incomplete outer ring 116 of the first guidance retainer ring 110 is circumferentially offset by 180° relative to the incomplete outer ring 116 of the second guidance retainer ring 112. This is shown in Fig. 1, where the outer ring 116 of the first guidance retainer ring 110 extends more fully to the right as oriented in Fig. 1, and the outer ring 116 of the second guidance retainer ring 112 extends more fully to the left as oriented in Fig. 1. In a first position, shown in Fig. 1, the valve head 102 is spaced apart from an opening 122 of the valve bore 106. This position allows flow through the drain bore 106. In a second position, shown in Fig. 3, the valve head 102 is sealed against the opening 122 of the valve bore 106, preventing flow through the valve bore 106. The first and second guidance retainer rings 110, 112 follow the valve head 102 and valve stem 104 when moving between the first and second positions, i.e. when moving relative to the housing 108 to open and close the valve assembly 100. The valve stem 104 and the first and second guidance retainer rings 110, 112 maintain a net of zero force in a radial direction relative to a longitudinal axis A of the valve stem 104, i.e. in a direction to the right and left in Figs. 1 and 3. This reduces wear between the housing 108 and the first and second guidance retainer rings 110, 112. This can provide similar pressure drop relative to traditional guidance techniques, but can decrease forces acting on a retainer relative to traditional techniques. The reduction in forces can improve valve reliability and lifetime.

The methods and systems of the present disclosure, as described above and shown in the drawings, provide for valve retainer guidance for movement of a valve stem within a housing with improved performance relative to traditional techniques. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A valve assembly comprising:
a valve head (102);
a valve stem (104) extending from the valve head and into a drain bore (106) in a housing (108);
a first guidance retainer ring (110) mounted around the valve stem at a first axial location on the valve stem; and
a second guidance retainer ring (112) mounted around the valve stem at a second axial location on the valve stem spaced apart from the first axial location; wherein
the first guidance retainer ring (110) includes an inner ring (114) that forms a full 360° ring and an outer ring (116) spaced radially apart from the inner ring, wherein the outer ring forms an incomplete ring less than a full 360°, and wherein the outer ring (116) of the first guidance retainer ring (110) contacts the housing (108);
wherein the second guidance retainer ring (112) includes an inner ring that forms a full 360° ring and an outer ring spaced radially apart from the inner ring, wherein the outer ring forms an incomplete ring less than a full 360°, and wherein the outer ring of the second guidance retainer ring contacts the housing; and
wherein the incomplete ring of the first guidance retainer ring is circumferentially offset by 180° relative to the incomplete ring of the second guidance retainer ring.

2. The valve assembly as recited in claim 1, wherein in a first position the valve head (102) is spaced apart from an opening of the drain bore (106), and in a second position the valve head is sealed against the opening of the drain bore (106).

3. The valve assembly as recited in claim 2, wherein the first and second guidance retainer rings (110, 112) follow the valve head (102) and valve stem (104) moving between the first and second positions when moving relative to the housing.

4. The valve assembly as recited in claim 3, wherein the valve stem (104) and the first and second guidance retainer ring maintain a net of zero force in a radial direction relative to a longitudinal axis of the valve stem.

5. The valve assembly as recited in any preceding claim, wherein at least one flow bore (118) is defined through the first guidance retainer ring between the inner ring and the outer ring of the first guidance retainer ring.

6. The valve assembly as recited in claim 5, wherein the at least one flow bore (118) includes two arcuate bores, with three spokes (120) connecting the inner and outer rings of the first guidance retainer ring.

7. The valve assembly as recited in claim 6, wherein at least one flow bore is defined through the second guidance retainer ring between the inner ring and the outer ring of the second guidance retainer ring.

8. The valve assembly as recited in claim 7, wherein the at least one flow bore of the second guidance retainer ring includes two arcuate bores, with three spokes connecting the inner and outer rings of the second guidance retainer ring.

9. The valve assembly as recited in claim 8, wherein the first and second guidance retainer rings are identical in structure to one another.

## Patentansprüche

1. Ventilanordnung, umfassend:
einen Ventilkopf (102);
einen Ventilschaft (104), der sich von dem Ventilkopf und in eine Ablaufbohrung (106) in einem Gehäuse (108) erstreckt;
einen ersten Führungshalterungsring (110), der um den Ventilschaft an einer ersten axialen Stelle an dem Ventilschaft montiert ist; und
einen zweiten Führungshalterungsring (112), der um den Ventilschaft an einer zweiten axialen Stelle an dem Ventilschaft, die von der ersten axialen Stelle beabstandet ist, montiert ist; wobei
der erste Führungshalterungsring (110) einen Innenring (114), der einen vollen 360°-Ring bildet, und einen Außenring (116), der radial von dem Innenring beabstandet ist, beinhaltet, wobei der Außenring einen unvollständigen Ring von weniger als vollen 360° bildet, und wobei der Außenring (116) des ersten Führungshalterungsrings (110) das Gehäuse (108) kontaktiert;
wobei der zweite Führungshalterungsring (112) einen Innenring, der einen vollen 360°-Ring bildet, und einen Außenring, der radial von dem Innenring beabstandet ist, beinhaltet, wobei der Außenring einen unvollständigen Ring von weniger als vollen 360° bildet, und wobei der Außenring des zweiten Führungshalterungsrings das Gehäuse kontaktiert; und
wobei der unvollständige Ring des ersten Führungshalterungsrings in Umfangsrichtung um 180° relativ zu dem unvollständigen Ring des zweiten Führungshalterungsrings versetzt ist.

2. Ventilanordnung nach Anspruch 1, wobei in einer ersten Position der Ventilkopf (102) von einer Öffnung der Ablaufbohrung (106) beabstandet ist, und in einer zweiten Position der Ventilkopf gegen die Öffnung der Ablaufbohrung (106) abgedichtet ist.

3. Ventilanordnung nach Anspruch 2, wobei der erste und der zweite Führungshalterungsring (110,112) dem Ventilkopf (102) und dem Ventilschaft (104) folgen, die sich zwischen der ersten und der zweiten Position bewegen, wenn sie sich relativ zu dem Gehäuse bewegen.

4. Ventilanordnung nach Anspruch 3, wobei der Ventilschaft (104) und der erste und der zweite Führungshalterungsring eine Nettokraft von null in einer radialen Richtung relativ zu einer Längsachse des Ventilschafts aufrechterhalten.

5. Ventilanordnung nach einem der vorhergehenden Ansprüche, wobei mindestens eine Strömungsbohrung (118) durch den ersten Führungshalterungsring zwischen dem Innenring und dem Außenring des ersten Führungshalterungsrings definiert ist.

6. Ventilanordnung nach Anspruch 5, wobei die mindestens eine Strömungsbohrung (118) zwei bogenförmige Bohrungen beinhaltet, mit drei Speichen (120), die den Innen- und den Außenring des ersten Führungshalterungsrings verbinden.

7. Ventilanordnung nach Anspruch 6, wobei mindestens eine Strömungsbohrung durch den zweiten Führungshalterungsring zwischen dem Innenring und dem Außenring des zweiten Führungshalterungsrings definiert ist.

8. Ventilanordnung nach Anspruch 7, wobei die mindestens eine Strömungsbohrung des zweiten Führungshalterungsrings zwei bogenförmige Bohrungen beinhaltet, mit drei Speichen, die den Innen- und den Außenring des zweiten Führungshalterungsrings verbinden.

9. Ventilanordnung nach Anspruch 8, wobei der erste und der zweite Führungshalterungsring in der Struktur identisch zueinander sind.

## Revendications

1. Ensemble soupape comprenant :
une tête de soupape (102) ;
une tige de soupape (104) s'étendant de la tête de soupape et dans un alésage de drainage (106) dans un boîtier (108) ;
une première bague de retenue de guidage (110) montée autour de la tige de soupape au niveau d'un premier emplacement axial sur la tige de soupape ; et
une seconde bague de retenue de guidage (112) montée autour de la tige de soupape au niveau d'un second emplacement axial sur la tige de soupape, espacé du premier emplacement axial ; dans lequel
la première bague de retenue de guidage (110) comporte une bague interne (114) qui forme une bague complète de 360 ° et une bague externe (116) espacée radialement de la bague interne, dans lequel la bague externe forme une bague incomplète inférieure à 360 °, et dans lequel la bague externe (116) de la première bague de retenue de guidage (110) est en contact avec le boîtier (108) ;
dans lequel la seconde bague de retenue de guidage (112) comporte une bague interne qui forme une bague complète de 360 ° et une bague externe espacée radialement de la bague interne, dans lequel la bague externe forme une bague incomplète inférieure à 360 °, et dans lequel la bague externe de la seconde bague de retenue de guidage est en contact avec le boîtier ; et
dans lequel la bague incomplète de la première bague de retenue de guidage est décalée circonférentiellement de 180 ° par rapport à la bague incomplète de la seconde bague de retenue de guidage.

2. Ensemble soupape selon la revendication 1, dans lequel, dans une première position, la tête de soupape (102) est espacée d'une ouverture du trou de drainage (106), et dans une seconde position, la tête de soupape est scellée contre l'ouverture du trou de drainage (106).

3. Ensemble soupape selon la revendication 2, dans lequel les première et seconde bagues de retenue de guidage (110, 112) suivent la tête de soupape (102) et la tige de soupape (104) se déplaçant entre la première et la seconde position lorsqu'elles se déplacent par rapport au boîtier.

4. Ensemble soupape selon la revendication 3, dans lequel la tige de soupape (104) et la première et la seconde bague de retenue de guidage maintiennent une force nette nulle dans une direction radiale par rapport à un axe longitudinal de la tige de soupape.

5. Ensemble soupape selon une quelconque revendication précédente, dans lequel au moins un alésage d'écoulement (118) est défini à travers la première bague de retenue de guidage entre la bague interne et la bague externe de la première bague de retenue de guidage.

6. Ensemble soupape selon la revendication 5, dans lequel l'au moins un alésage d'écoulement (118) comporte deux alésages arqués, avec trois rayons (120) reliant les bagues interne et externe de la première bague de retenue de guidage.

7. Ensemble soupape selon la revendication 6, dans lequel au moins un alésage d'écoulement est défini à travers la seconde bague de retenue de guidage entre la bague interne et la bague externe de la seconde bague de retenue de guidage.

8. Ensemble soupape selon la revendication 7, dans lequel l'au moins un alésage d'écoulement de la seconde bague de retenue de guidage comporte deux alésages arqués, avec trois rayons reliant les bagues interne et externe de la seconde bague de retenue de guidage.

9. Ensemble soupape selon la revendication 8, dans lequel les première et seconde bagues de retenue de guidage sont identiques en structure l'une à l'autre.
